# EUROPEAN PATENT APPLICATION

(11) **EP 3 043 225 A1**
(43) Date of publication of application: **13.07.2016**
(21) Application number: 15150274.7
(22) Date of filing: 07.01.2015
(51) Int. Cl.: G05B 23/02

(54) **Method of resolving malfunction in electric drive system**

(71) Applicant: ABB Technology Oy, 00380 Helsinki (FI)
(72) Inventor: Ahtiainen, Timo, 00380 Helsinki (FI); Nousiainen, Tero, 00380 Helsinki (FI); Matinlauri, Antti, 00380 Helsinki (FI)
(74) Representative: Kolster Oy Ab

(57) **Abstract**

The invention concerns a method and apparatus for resolving a malfunction in an electric drive system. The method is based on detecting a malfunction and its root cause, presenting those to a user and then providing instructions and a shortcut to the user through a user interface for resolving the root cause of the malfunction.

## Description

### FIELD OF THE INVENTION

The present invention relates to a method of resolving malfunctions in electric drive systems and particularly to resolving malfunctions in frequency converters of the electric drive systems.

### BACKGROUND OF THE INVENTION

Modern electric drive systems have a large number of parameters and settings which can be read and adjusted through a user interface of the electric drive system. A wrong combination of settings may inhibit starting of the electric drive for example in order to protect the electric drive itself or a device connected to it. Also faulty electrical parts or connections may inhibit starting of the electric drive. Some of these malfunctions may produce an error code that can be presented through the user interface to a user of the electric drive. Some of these malfunctions may not produce an error code but still the starting of the electric drive might be inhibited.

The large number of parameters and settings usually leads to difficulties in finding a certain parameter as the user interface is typically quite minimalistic with only few buttons and a small display. User interfaces have differences between manufacturers and models which makes the situation even worse. It is increasingly difficult to check all the settings and try to investigate if there are problems when starting is inhibited. Though sometimes an error code is provided, it is still not apparent what has caused the inhibition and what is needed for removing the inhibition unless the user is an experienced expert with that particular model of the electric drive system.

### BRIEF DESCRIPTION OF THE INVENTION

An object of the present invention is thus to provide a method and an apparatus for implementing the method so as to alleviate the above disadvantages. The objects of the invention are achieved by a method and an apparatus which are characterized by what is stated in the independent claims. The preferred embodiments of the invention are disclosed in the dependent claims.

The invention is based on the idea of resolving a malfunction in an electric drive system by detecting a malfunction in the system and a root cause for the malfunction, presenting the root cause for the malfunction to a user through a user interface, and then providing instructions to the user through the user interface for addressing the root cause, and finally providing a shortcut through the user interface for resolving the root cause of the malfunction.

An advantage of the method and apparatus of the invention is that the resolving of the malfunction is much easier and faster than in the prior art systems. A further advantage is that seeking of instructions from manuals or other external sources to resolve the malfunction is greatly reduced.

### BRIEF DESCRIPTION OF THE DRAWINGS

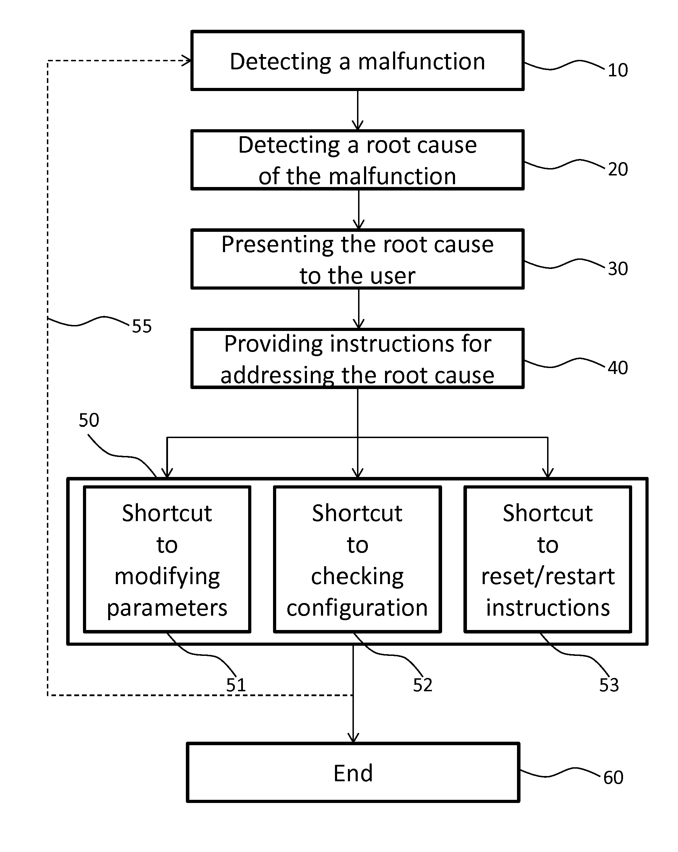

In the following the invention will be described in greater detail by means of preferred embodiments with reference to the accompanying drawings, in which
Figure 1 is a flowchart of method according to an embodiment of the invention.

### DETAILED DESCRIPTION OF THE INVENTION

Figure 1 is a flow chart illustrating method steps according to an embodiment of the invention. Inhibition of start of a frequency converter is used in this embodiment as an example of a malfunction of an electric drive system. These electric drive systems are referred as drives from hereinafter.

First a user gives a start command to a drive which initiates a start-up routine within the drive. Alternatively, diagnostics can be run to check if the system is operational. The diagnostics can be run prior to starting of the drive. The drive will check whether the system is able to start or not. This can be realized by reading e.g. a current state of a state machine or reading active error codes of the drive or by reading status, signal or information words of the drive. If the error code, the current state or any other indicator or parameter inhibits starting of the drive, a malfunction is detected 10 and it is displayed as a message on a screen of a user interface. Preferably self-explaining plain language is used so that a user having read the message understands the situation without reading a user manual or other manuals or instructions. In this case the message could be "Drive cannot start" or "Start is inhibited". An error code may be provided but preferably with an explanation what the error code means. The message can be displayed in a pop-up window on top of the user interface screen so that it is easily noticed and directly accessible.

Preferably the state machine has an integrated logic for identifying the reason why starting is inhibited. The state in which the state machine stops is detected and the root cause that caused the stop is examined. If the state in which the state machine stopped does not clearly indicate the root cause, further examination is performed by analysing parameters, variables, signals, conditions (such as voltages), etc. For example, the state machine detects on which state or step the start-up routine has stopped and this information can also be displayed on the display of the user interface. A root cause which caused the stop of the start-up routine might not be determined with this information only so a further analysis might be needed. In the prior art systems, to find out the root cause, a number of parameters and settings would have to be checked and adjusted if necessary.

In the present invention the root cause that has inhibited starting of the drive can be identified automatically. This can be realized by examining current states of state machines, actual values (measured or estimated values such as DC voltage), parameters and settings and by comparing the results with set values or target values. For example, a state machine could be in a wrong state, an actual value of DC voltage could be lower than its target value, a parameter could be wrong or a setting could be incompatible. Typically each state of a state machine and each error code concerns one or more functions or functional blocks. These connections can be used for determining the root cause 20 and narrowing down the number of possible root causes. It is possible that a current state of the state machine already defines the root cause so clearly that further analysis is not needed so the root cause can be readily presented to the user. However, a further analysis is performed when the root cause remains unclear after the detection of the stopped state. For example in this case the current state of the state machine could be "start inhibited". Starting can be inhibited for a number of reasons but the settings, parameters and actual values (voltages, currents, signals, temperatures, etc.) that could cause this state are known and some reasons and related parameters and settings can already be ruled out. The root cause can be determined by measuring parameters and comparing the results with the set values or target values of the parameters. For example, a parameter should be checked by the user if a target value has not been achieved even though it should have been. When the root cause has been detected it is presented 30 to the user on the screen of the user interface.

There can be other parameters which affect the first parameter and those might be the reason why the target value has not been reached. For example, maximum speed parameter could be lower than start speed parameter so the maximum speed parameter prevents the speed from reaching the start speed thus preventing the drive from starting. In these cases also those related parameters should be checked either automatically or by the user. The user is instructed to check the parameters by presenting a message 40 on the screen of the user interface, preferably together with a plain language root cause. For example messages like "Jogging mode is active. Normal start is not allowed. Check parameter p20.25." or "Emergency stop (OFF3) active. Check parameter p21.05." could be displayed to the user.

There are also a number of cases where configuration of the drive can inhibit starting of the drive. Missing signals or connections or conflicts in the configuration are detected and the user is again informed with a message. For example, the message could be "Stop command is active (EXT1/EXT2). In2/In3 source is configured as the stop signal (EXT1/EXT2)." or "PFC PID is not selected as active reference source in scalar mode.". It is possible that the configuration problems cannot be solved through the user interface because some physical changes in the configuration might be needed but the message informs the user to check the related part of the system instead of having to go through the whole system configuration. These messages can be accompanied with prompts to check related parameters, for example "Check parameters p20.01/p20.06 and p20.04/p20.09."

Another reason for the inhibition of start can be that due to a recent event, a reset or a restart is needed for removing the start inhibition. Once again, a message is presented on the screen of the user interface and the message contains the root cause and instructions or a shortcut to instructions 53 on how to resolve it. The message could be for example "The start signal is active but a new rising edge of the start signal is required to start." or "Drive is not ready. Internal start inhibit active. Please try to reboot control board to clear this inhibit."

In certain electric drive systems there can be also other root causes, such as functional safety issues, which can cause a malfunction such as inhibition of start as in above example. A similar method of detecting, examining and reporting can be employed to guide the user as far possible for resolving the malfunction.

Now the user has seen the message containing the root cause for the malfunction, i.e. inhibition of start in this example, and the parameters that have to be checked. Instead of browsing through the menus searching for a place to check and adjust the parameters, a shortcut is provided for resolving the root cause of the malfunction 50, in this case a shortcut for a direct access to modifying the one or more parameters 51 causing the malfunction. For example a parameter may be presented for adjustment because it was detected it exceeds an allowed range. There are a number of ways to implement the shortcut but the idea is that after reading the message about the root cause of the malfunction the user can move to read and adjust the parameters of interest with a push of a button or simply after acknowledging the message. If the root cause relates to configuration issues, a shortcut can be provided for instructions for checking the configuration 52. For example, the instructions may be given for checking integrity of certain cables or cable connections because a missing signal was detected. If the root cause can be resolved by resetting or restarting the system, a shortcut can be provided for instructions for resetting or restarting 53 the system. For example, an emergency stop button has been activated and later de-activated but a full system restart is needed after the emergency stop de-activation.

The shortcut button may be a physical button or a button, a link or an area on the screen of the user interface. Also the pushing can be replaced by e.g. clicking or pointing with a pointing device, or tapping or doing some other gesture on a touch screen. The parameters can be presented for adjusting together with the message about the root cause if the screen of the user interface is large enough for displaying all this information. If the parameters are not presented with the message, the user is preferably prompted to press the shortcut button. In an embodiment, push of any button or touching the screen while the message about the root cause is displayed leads to a view of parameters of interest where the parameters can be read and adjusted.

The shortcut leads to a view of parameters of interest in the screen of the user interface. If the message was for example "Check parameters p20.01/p20.06 and p20.04/p20.09.", the parameters of interest view could present parameters p20.01 and p20.04, p20.06 and p20.09, or all four parameters depending on the configuration. The parameters that are not in use cannot cause a malfunction and thus those are not presented in this view. In the parameters of interest view those parameters would be displayed with their measured and set/target values for easily checking any differences in them. Preferably the values of the parameters can be adjusted directly from this view. Alternatively a new view can be opened for each parameter by selecting the parameter and the adjustment of the parameter can be done in this view.

The malfunction may have several root causes which are masking each other. For example, if the start-up routine first checks the configuration, detects a problem with the configuration and stops there, any problems with the parameters may not be noticed until the issues with the configuration are first resolved. Therefore after resolving one malfunction, the method can return back 55 to detecting a next malfunction and repeating the method steps for resolving the malfunction which was detected after the first malfunction was resolved.

A first aspect of the invention is a method of resolving a malfunction in an electric drive system. The method comprises steps of detecting a malfunction in operation of the electric drive system, detecting a root cause for the malfunction, and presenting the root cause for the malfunction to a user through a user interface. The method is characterized by providing instructions to the user through the user interface for addressing the root cause, and providing a shortcut through the user interface for resolving the root cause of the malfunction. In an embodiment said malfunction is an inhibition or a failure to start.

In an embodiment said shortcut is for modifying one or more parameters of the electric drive system for resolving the root cause of the malfunction. In another embodiment said shortcut is for providing instructions for checking one or more issues with the configuration of the electric drive system for resolving the root cause of the malfunction. In yet another embodiment said shortcut is for providing instructions for reset or restart of the electric drive system for resolving the root cause of the malfunction. In an embodiment two or three of the preceding embodiments are combined and a destination of said shortcut depends on the root cause of the malfunction.

In an embodiment the malfunction in the operation of the electric drive system is detected by analysing at least one of the following: fault code, current state of a state machine and a parameter of the electric drive system.

In an embodiment the root cause of the malfunction is detected by analysing at least one of the following: fault code, current state of a state machine, actual value and a parameter of the electric drive system. The actual value can be for example a measured value or an estimated value of the prevailing conditions, such as a voltage, current, speed, temperature, etc.

In an embodiment the instructions are provided in a pop-up screen on a screen of the user interface.

In an embodiment the provided shortcut is a link or a button on the screen of the user interface.

A second aspect of the invention is an electric drive apparatus for implementing the first aspect of the invention.

It will be obvious to a person skilled in the art that, as the technology advances, the inventive concept can be implemented in various ways. The invention and its embodiments are not limited to the examples described above but may vary within the scope of the claims.

## Claims

1. A method of resolving a malfunction in an electric drive system, the method comprising steps of
detecting a malfunction (10) in operation of the electric drive system,
detecting a root cause (20) for the malfunction, and presenting the root cause (30) for the malfunction to a user through a user interface,
wherein the method is **characterized by** providing instructions (40) to the user through the user interface for addressing the root cause, and
providing a shortcut (50) through the user interface for resolving the root cause of the malfunction.

2. A method according to claim 1, **characterized by** providing a shortcut through the user interface for modifying one or more parameters (51) of the electric drive system for resolving the root cause of the malfunction.

3. A method according to claim 1, **characterized by** providing a shortcut through the user interface for providing instructions for checking one or more issues with the configuration (52) of the electric drive system for resolving the root cause of the malfunction.

4. A method according to claim 1, **characterized by** providing a shortcut through the user interface for providing instructions for reset or restart (53) of the electric drive system for resolving the root cause of the malfunction.

5. A method according to any one of claims 1 to 4, **characterized in that** the malfunction in the operation of the electric drive system is detected by analysing at least one of the following: fault code, current state of a state machine, actual value and a parameter of the electric drive system.

6. A method according to any one of claims 1 to 5, **characterized in that** the root cause of the malfunction is detected by analysing at least one of the following: fault code, current state of a state machine, actual value and a parameter of the electric drive system.

7. A method according to any one of claims 1 to 6, **characterized in that** the instructions are provided in a pop-up screen on a screen of the user interface.

8. A method according to any one of claims 1 to 7, **characterized in that** the provided shortcut is a link or a button on the screen of the user interface.

9. A method according to any one of claims 1 to 8, **characterized in that** the malfunction is a failure to start.

10. An electric drive apparatus for implementing the method of claim
